**Europäisches Patentamt**

**European Patent Office**

**Office européen des brevets**

(19)

(11) Veröffentlichungsnummer: **0 116 829 B1**

(12) # EUROPÄISCHE PATENTSCHRIFT

(45) Veröffentlichungstag der Patentschrift:
20.11.86

(21) Anmeldenummer: **84100184.5**

(22) Anmeldetag: **10.01.84**

(51) Int. Cl.⁴: **B 05 B 9/04,** B 05 B 7/32,
A 46 B 11/02, F 16 J 13/12,
F 16 J 12/00

(54) **Druckbehälter zur Aufnahme von Flüssigkeiten.**

(30) Priorität: **18.02.83 DE 3305658**

(43) Veröffentlichungstag der Anmeldung:
**29.08.84 Patentblatt 84/35**

(45) Bekanntmachung des Hinweises auf die Patenterteilung:
**20.11.86 Patentblatt 86/47**

(84) Benannte Vertragsstaaten:
**CH DE FR GB IT LI NL**

(56) Entgegenhaltungen:
**DE - B - 1 300 874
DE - B - 1 450 288
GB - A - 351 443
US - A - 1 465 856**

**SOVIET INVENTIONS ILLUSTRATED, Sektion Q, Woche
E 20, 30. Juni 1982 DERWENT PUBLICATIONS LTD.,
London Q 65**

(73) Patentinhaber: **J. Wagner GmbH,
Eisenbahnstrasse 18-26, D-7990 Friedrichshafen 12 (DE)**

(72) Erfinder: **Karliner, Rudolf, 14715 Wychewood Road,
Minnetonka, MN 55343 (US)**

(74) Vertreter: **Engelhardt, Guido, Dipl.-Ing.,
Montafonstrasse 35 Postfach 1350,
D-7990 Friedrichshafen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Druckbehälter zur Aufnahme von Flüssigkeiten, insbesondere zum kontinuierlichen Speisen eines über eine Schlauchleitung an diesen angeschlossenen Farbrollers, eines Füllpinsels, einer Düse oder dgl. mit einer unter Druck stehenden Flüssigkeit, wobei die Einfüllöffnung des Druckbehälters durch einen abnehmbaren Deckel gas- und flüssigkeitsdicht verschlossen ist, der mittels eines Bajonettverschlusses gehalten ist.

Bei den bisher bekannten Druckbehältern dieser Art ist der im Querschnitt U-förmig ausgebildete Deckel mittels eines auf der Aussenmantelfläche des Behälters in diesen eingearbeiteten Gewinde aufgeschraubt. Obwohl zwischen diesen beiden Teilen eine Dichtung eingeklemmt ist, sind dennoch eine sichere Halterung des Deckels und ein druckdichter Verschluss oftmals nicht gegeben. Die Verschraubung kann nämlich mitunter nicht fest genug angezogen werden, auch kann sich diese durch Erschütterungen von selbst lösen, so dass in dem Druckbehälter ein Druckabbau erfolgt und eine sachgerechte Arbeitsweise somit nicht mehr möglich ist. Auch ist das Nachfüllen eines in dieser Weise ausgebildeten Druckbehälters sehr zeitaufwendig und umständlich, da an den Deckel meist Arbeitsgeräte angeschlossen sind und diese demnach abgenommen werden müssen oder zusammen mit dem Deckel mehrfach beim Abschrauben und erneuten Aufschrauben mit diesem zu verdrehen sind.

Durch die DE-B-1 300 874 ist zwar ein Druckbehälter der eingangs genannten Art bekannt, der Bajonettverschluss ist hierbei jedoch sehr kompliziert und aufwendig ausgebildet. Bei diesem Druckbehälter wird die Einfüllöffnung von einem ringförmigen Flansch begrenzt, der durch einen Verriegelungsring verankert ist, der mit drei gleichmässig verteilt angeordneten nach oben abstehenden Vorsprüngen, die ausserdem mit nach innen geneigten Nocken ausgestattet sind, versehen ist. Des weiteren ist eine verschraubbare Nockenplatte erforderlich, um zwischen dieser und dem Flansch eine Dichtung einspannen zu können. Eine einfache Bedienbarkeit und Handhabung ist bei dieser Verschlussausgestaltung nicht gegeben, auch ist keine Sicherung gegen ungewolltes Öffnen vorgesehen.

Aufgabe der Erfindung ist es daher, einen Druckbehälter zur Aufnahme von Flüssigkeiten der vorgenannten Gattung zu schaffen, bei dem der Deckel nicht nur leicht und in kurzer Zeit abgenommen und wiederum aufzusetzen ist, sondern der in Schliessstellung zuverlässig gehalten wird, so dass ein selbsttätiges ungewolltes Öffnen mit Sicherheit ausgeschlossen ist. Die Handhabung beim Abnehmen des Deckels und dem erneuten Verspannen soll demnach sicher und einfach sein, auch soll der Bauaufwand, um dies zu erreichen, gering gehalten werden.

Gemäss der Erfindung wird dies bei einem Druckbehälter der vorgenannten Gattung dadurch erreicht, dass der Bajonettverschluss durch zwei oder mehrere in den Behälterdeckel eingearbeitete, vorzugsweise gleichmässig über den Umfang verteilt angeordnete und sich in Umfangsrichtung erstreckende Einschnitte und durch diesen zugeordneten an der Behälterwandung in deren oberen Bereich eingearbeitete Vorsprüngen gebildet ist, die durch Drehen in die Einschnitte einführbar sind, und dass zur Sicherung gegen Überdruck und zur Arretierung des Behälterdeckels in Schliessstellung in diesen ein von Hand entriegelbares Überdruckventil eingesetzt ist, dessen verstellbarer Ventilkörper mit der Behälterwandung verrastbar ist.

Um eine stets sichere Arretierung des Behälterdeckels in Schliessstellung zu gewährleisten, ist es angebracht, den Ventilkörper des Überdruckventils mit einem zentrisch angeordneten zapfenförmigen Ansatz zu versehen, der in eine in die dem Behälterdeckel zugekehrte Stirnseite der Behälterwandung eingearbeitete, vorzugsweise halbkreisförmig ausgebildete, nach innen offene Ausnehmung einführbar ist.

Das federbelastete Überdruckventil sollte hierbei in einer in dem Behälterdeckel eingeformten entlüfteten Aufnahmekammer eingesetzt sein, an deren Stirnwand die Ventilfeder abgestützt ist, so dass dieses vor Beschädigungen geschützt ist.

Zur Entriegelung des Überdruckventils ist es vorteilhaft, an dessen Ventilkörper ein aus der Aufnahmekammer ragendes Griffstück anzubringen und an dieser, vorzugsweise an der oberen Stirnseite, einen oder mehrere mit dem Griffstück zusammenwirkende Auflaufnocken vorzusehen, derart, dass in einer Verdrehstellung des Griffstückes der in die Ausnehmung der Behälterwand eingreifender Ansatz ausser Eingriff gehalten wird. Der Druckbehälter wird somit, bevor der Deckel abgenommen werden kann, entlüftet und die Arretierung ist beim Verdrehen des Deckels aufgehoben, so dass das Entnehmen und Aufsetzen des Deckels ohne Schwierigkeiten vorgenommen werden kann.

Um das Aufsetzen des Deckels zu vereinfachen, ist es des weiteren angebracht, jeden der an der Behälterwandung angeformten in eine Hinterschneidung eingreifenden Vorsprüngen jeweils eine, vorzugsweise in dessen Mitte angeordnete Ausnehmung zur Einrastung des an dem Ventilkörper angebrachten Ansatzes zu versehen.

Ausserdem kann der Behälterdeckel mit einem vorzugsweise mittig angeordneten Bund zur Halterung und Befestigung eines in den Druckbehälter einführbaren Ansaugschlauches und der zu dem Farbroller führenden Schlauchleitung ausgestattet werden.

Die gemäss der Erfindung vorgesehene Ausgestaltung ermöglicht es mit einfachen Mitteln, den Deckel eines Druckbehälters leicht und ohne Schwierigkeiten zu befestigen und zu lösen, ausserdem ist mit Sicherheit ausgeschlossen, dass sich der Behälterdeckel von selbst lösen kann und dass beim Abnehmen des Behälterdeckels sich noch Druckmittel in dem Behälter befindet. Wird nämlich der Deckel mittels eines in besonderer Weise ausgebildeten Bajonettverschlusses an dem Druckbehälter befestigt und wird mit Hilfe des zur Druckbegrenzung notwendigen Überdruckventils der Behälterdeckel in Schliessstellung verriegelt, so ist sichergestellt, dass der Behälterdeckel exakt arretiert ist. Eine Beschädigung der Dichtung ist somit ausgeschlossen, auch ist die Verbindung, je nach der Teilung der in die Freisparungen eingreifenden Vorsprünge nur durch eine geringe Umdrehung von beispielsweise 90° herzustellen. Und um den Deckel abnehmen zu können, ist zunächst das Überdruckventil zu entriegeln, so dass der Druckbehälter, noch bevor der Deckel abgenommen werden kann, entlüftet ist. Das Auswechseln eines Farbbehälters ist demnach in kurzer Zeit vorzunehmen, auch ist die Gefahr eines Unfalls, da ein nicht unter Überdruck stehendes Behältnis zu öffnen ist, vermieden.

In der Zeichnung ist ein Ausführungsbeispiel eines gemäss der Erfindung ausgebildeten Druckbehälters zur Aufnahme von Flüssigkeiten dargestellt und nachfolgend im einzelnen erläutert. Hierbei zeigen:

Fig. 1 den mit einem Farbroller versehenen Druckbehälter in Vorderansicht und teilweise im Schnitt,

Fig. 2 einen achssenkrechten Schnitt durch den Druckbehälter nach Fig. 1 nach der Linie II-II,

Fig. 3 das bei dem Druckbehälter nach Fig. 1 vorgesehene, den Deckel verrastende Überdruckventil in einer vergrösserten Darstellung und

Fig. 4 das Überdruckventil nach Fig. 2 in einer anderen Betriebsstellung.

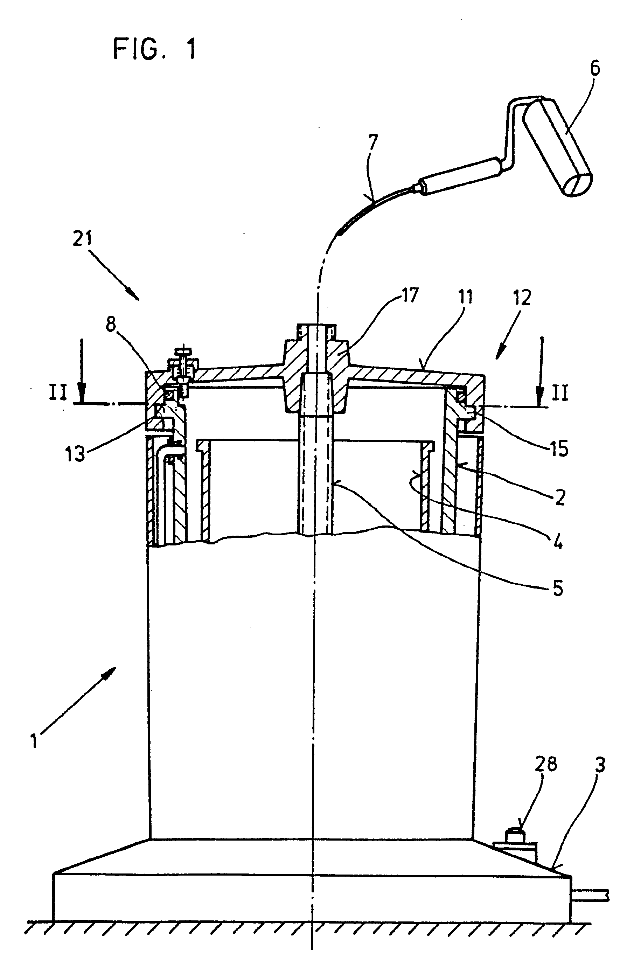

Der in Fig. 1 dargestellte und mit 1 bezeichnete, mit Standfüssen 3 versehene Druckbehälter, der durch einen aufgesetzten Deckel 11 gas- und flüssigkeitsdicht verschlossen ist, dient zur Aufnahme eines in diesem angeordneten Farbbehälters 4, aus dem Farbflüssigkeit durch den in dem Druckbehälter 1 herrschenden auf unterschiedliche Weise, beispielsweise mit Hilfe eines über einen Schalter 28 einschaltbaren Kompressors zu erzeugenden Überdruck über eine Schlauchleitung 7 einem Farbroller 6, um mit diesem aufgetragen zu werden, kontinuierlich zugeführt wird. Der Überdruck wirkt hierbei auf die in dem Farbbehältnis 4 befindliche Farbflüssigkeit ein, so dass diese durch ein an einem Bund 17 des Druckbehälters 11 befestigtes Steigrohr 5 und die ebenfalls an diesem angeschlossene Schlauchleitung 7 gefördert wird.

Um den Deckel 11 leicht mit dem Druckbehälter 1 verbinden zu können, ist ein Bajonettverschluss 12 vorgesehen, der aus einer in den die Behälterwandung 2 überkragenden Bund des Deckels 11 eingearbeitete ringnutförmige Einschnitte 13, die durch Freisparungen 14 unterbrochen sind und durch an der Behälterwandung 2 angebrachte radial gerichtete Vorsprünge 15 gebildet ist. Die Freisparungen 14 und die Vorsprünge 15 sind gleichmässig über den Umfang derart verteilt angeordnet, dass die Vorsprünge 15 in die Freisparungen 14 einführbar und durch eine geringfügige Verdrehung des Deckels 11 in den Einschnitten 13 zu liegen kommen.

Zur Verriegelung in Schliessstellung — zwischen der Behälterwandung 2 und dem Deckel 11 ist eine Dichtung 8 angeordnet, so dass der Druckbehälter 1 gas- und flüssigkeitsdicht verschlossen ist — ist ein Überdruckventil 21 vorgesehen, das in einer an dem Deckel 11 angeformten Aufnahmekammer 9, die mit einer Entlüftungsöffnung 10 versehen ist, eingesetzt ist. Der kegelig ausgebildete Ventilkörper 22 wird durch die Kraft einer Ventilfeder 24 an eine an dem Deckel 11 angebrachte Ventilfläche 27 gedrückt und weist einen in den Druckbehälter 1 ragenden bolzenförmigen Ansatz 23. auf. Und in die Behälterwandung 2 sind etwa mittig zu den Vorsprüngen 15 nach innen offene halbkreisförmige Ausnehmungen 16 eingearbeitet, in die der Ansatz 23 eingreift. Ist somit der auf den Druckbehälter 1 aufgesetzte Deckel 11 derart verdreht, dass der Ansatz 23 in eine der Ausnehmungen 16 einrastet, so ist der Deckel verdrehsicher gehalten und kann ungewollt nicht abgenommen werden.

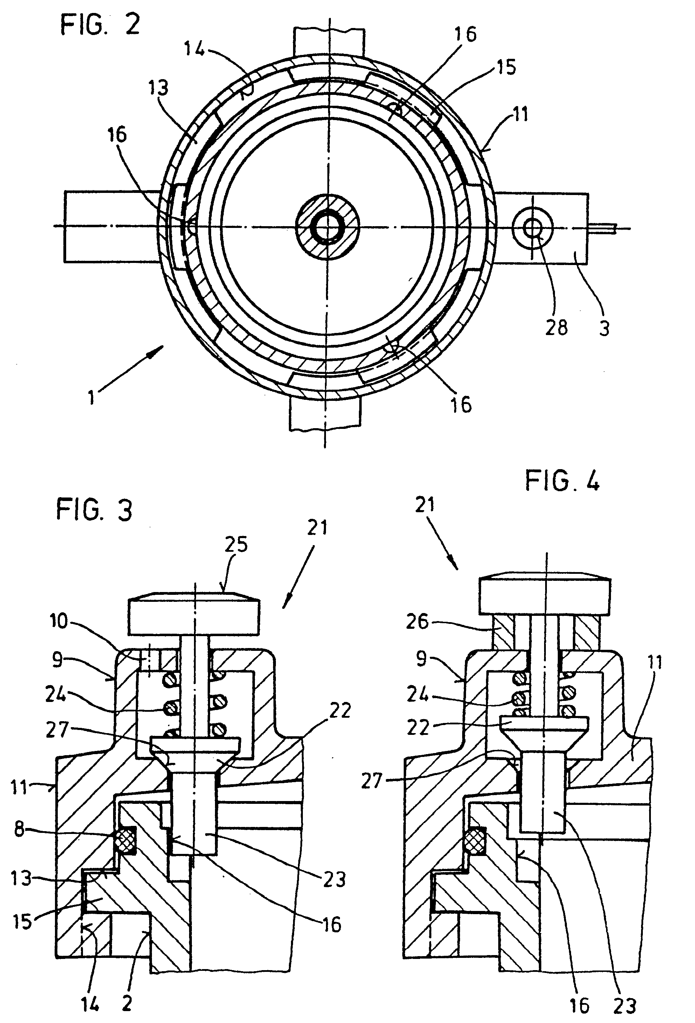

Zum Lösen dieser Verriegelung ist der Ansatz 23 aus der Ausnehmung 16 herauszuheben. Dazu ist an dem Ventilkörper 22 ein aus der Aufnahmekammer 9 nach aussen ragendes Griffstück 25 angeformt und an der Aufnahmekammer 9 sind, wie dies in Fig. 4 gezeigt ist, Auflaufnocken 26 angebracht, so dass durch Anheben und geringfügiges Drehen, um z.B. 90°, nicht nur die Verriegelung des Deckels 11 mit dem Druckbehälter 1 gelöst, sondern auch das Ventil 21 geöffnet wird und der in dem Druckbehälter 1 herrschende Überdruck sich abbaut, bevor der Deckel 11 durch geringfügiges Verdrehen, ohne dass dabei auf diesen eine Druckkraft einwirkt, abgenommen werden kann.

**Patentansprüche**

1. Druckbehälter (1) zur Aufnahme von Flüssigkeiten, insbesondere zum kontinuierlichen Speisen eines über eine Schlauchleitung (7) an diesen angeschlossenen Farbrollers (6), eines Füllpinsels, einer Düse oder dgl., mit einer unter Druck stehenden Flüssigkeit, wobei die Einfüllöffnung des Druckbehälters (1) durch einen abnehmbaren Deckel (11) gas- und flüssigkeitsdicht verschlossen ist, der mittels eines Bajonettverschlusses (12) gehalten ist, dadurch gekennzeichnet, dass der Bajonettverschluss (12) durch zwei oder mehrere in den Behälterdeckel (11) eingearbeitete, vorzugsweise gleichmässig über den Umfang verteilt angeordnete und sich in Umfangsrichtung erstreckende Einschnitte (13) und durch diesen zugeordneten an der Wandung (2) des Druckbehälters (1) in deren oberen Bereich vorgesehene Vorsprünge (15) gebildet ist, die durch Drehung in die Einschnitte (13) einführbar sind, und dass zur Sicherung gegen Überdruck und zur Arretierung des Behälterdeckels (11) in Schliessstellung in diesen ein von Hand entriegelbares Überdruckventil (21) eingesetzt ist, dessen verstellbarer Ventilkörper (22) mit der Behälterwandung (2) verrastbar ist.

2. Druckbehälter nach Anspruch 1, dadurch gekennzeichnet, dass zur Arretierung des Behälterdeckels (11) der Ventilkörper (22) des Überdruckventils (21) mit einem zentrisch angeordneten zapfenartigen Ansatz (23) versehen ist, der in eine in die dem Behälterdeckel (11) zugekehrte Stirnseite der Behälterwandung (2) eingearbeitete, vorzugsweise halbkreisförmig ausgebildete, nach innen offene Ausnehmung (16) einführbar ist.

3. Druckbehälter nach Anspruch 1 oder 2, dadurch gekennzeichnet, dass das federbelastete Überdruckventil (21) in einer in dem Behälterdeckel (11) eingeformten entlüfteten Aufnahmekammer (9) eingesetzt ist, an deren Stirnwand die Ventilfeder (24) abgestützt ist.

4. Druckbehälter nach einem oder mehreren der Ansprüche 1 bis 3, dadurch gekennzeichnet, dass zur Entriegelung des Überdruckventils (21) an dessen Ventilkörper (22) ein aus der Aufnahmekammer (9) ragendes Griffstück (25) angebracht ist und dass diese auf der oberen Stirnseite einen oder mehrere mit dem Griffstück (25) zusammenwirkende Auflaufnocken (26) aufweist, derart, dass in einer Verdrehstellung des Griffstückes (25) der in die Ausnehmung (16) der Behälterwandung (2) eingreifende Ansatz (23) ausser Eingriff gehalten ist.

5. Druckbehälter nach einem oder mehreren der Ansprüche 1 bis 4, dadurch gekennzeichnet, dass jedem der an der Behälterwandung (2) angeformten in eine Hinterschneidung (13) eingreifende Vorsprung (15) jeweils eine, vorzugsweise in dessen Mitte angeordnete Ausnehmung (16) zur Verrastung des an dem Ventilkörper (12) angebrachten Ansatzes (23) versehen ist.

6. Druckbehälter nach einem oder mehreren der Ansprüche 1 bis 5, dadurch gekennzeichnet, dass der Behälterdeckel (11) mit einem vorzugsweise mittig angeordneten Bund (17) zur Halterung und Befestigung eines in den Druckbehälter einführbaren Ansaugschlauches (5) und der zu dem Farbroller (6) führenden Schlauchleitung (7) versehen ist.

### Claims

1. Pressure vessel as receiver of liquids, particularly for the continuous supply of a pressurized liquid to a paint roller (6), a brush, a nozzle or the like connected to the vessel by means of a flexible line (7), whereby the fill in opening of the vessel (1) is closed by a cover (11) against gas and liquid leakage, which cover is held by means of a bayonet joint, characterized in that the bayonet joint (12) comprises two or more recesses (13) in the cover (11), preferably located symmetrically along the periphery and projections (15) assigned to the recesses at the wall (2) of the vessel (1) in the upper region of the wall, which projections are led into the recesses (13) by turning the cover, and that for saving against overpressure and in order to lock the cover (11) when closed a safety valve (21) is inserted which may be opened by hand, the adjustable valve body (22) of which may be locked with the wall (2) of the vessel.

2. Pressure vessel of claim 1, characterized in that in order to lock the cover (11) the valve body (22) of the safety valve (21) is provided with a centrically located pin shaped projection (23), which may be inserted into a recess (16) being open to the inner side and located in the front side of the wall (2) faced to the cover (11).

3. Pressure vessel of claim 1 or 2, characterized in that the safety valve being spring biased is inserted into a vented chamber (9) in the cover (11), at the front wall of which chamber the valve spring (24) is biased.

4. Pressure vessel of one or more of the claims 1 through 3, characterized in that in order to unlock the safety valve (21) a pull (25) extending out from the chamber (9) is mounted to the valve body (22) which pull has one or more cams (26) co-operating with the pull (25) in such that in one turned position of the pull (25) the projection (23) extending into the recess (23) in the wall (2) does not engage.

5. Pressure vessel of one or more of the claims 1 through 4, characterized in that to each of the projections (15) in the wall (2) extending into a recess (13) an opening (16) preferably located in the middle of the projection is provided in order to lock the protrusion (23) of the valve body (12).

6. Pressure vessel of one or more of the claims 1 through 5, characterized in that the cover (11) has a collar (17) preferably centrically located in order to hold and to mount a suction line (5) and the flexible line (7) leading to the paint roller (6).

### Revendications

1. Réservoir sous pression (1) pour receuil de liquides, en particulier, pour l'alimentation continue d'un rouleau à peindre (6) qui est raccordé à celui-ci à l'aide d'un tuyau flexible (7), d'un pinceau, d'un gicleur ou similaire avec un liquide se trouvant sous pression. L'orifice de remplissage du réservoir sous pression (1) est fermé de façon étanche aux gas et aux liquides par un couvercle (11) pouvant être retiré et qui est maintenu au moyen d'une fermeture à baïonnette (12), ainsi désigné, de sorte que la fermeture à baïonnete (12) est formée par deux ou plusieurs encoches (13) se développant dans le sens du pourtour usinées dans le couvercle de réservoir (11) disposées de préférence, uniformément sur le pourtour et par les épaulements (15) prévus dans la zone supérieure sur la paroi (2) du réservoir sous pression (1) qui sont guidables par rotation dans les encoches (13) et de sorte que, pour la sécurité contre la surpression et pour le blocage du couvercle du réservoir (11) dans la position de fermeture, il est incorporé dans celui-ci une valve de surpression (21) déverrouillable à la main dont le corps de soupape réglable (22) est bloqué avec la paroi du réservoir (2).

2. Réservoir sous pression, selon de droit 1, ainsi désigné, de sorte que pour le blocage du couvercle du réservoir (11), le corps de soupape (22) de la soupape de surpression (21) est muni d'un épaulement (23) ayant la forme d'un téton, disposé concentriquement qui est guidable dans un évidement (16) ouvert vers l'intérieur conçu de préférence de façon semi-circulaire, usiné dans la paroi du réservoir (2) côté frontal adjacent du couvercle du réservoir (11).

3. Réservoir sous pression, selon le droit 1 ou 2, ainsi désigné, de sorte que la soupape de surpression à ressort (21) est incorporée dans une chambre (9) désaérée formée dans le couvercle du réservoir (11), le ressort de soupape (24) est appuyé sur sa paroi frontale.

4. Réservoir sous pression, selon un ou plusieurs des droits 1 à 3, ainsi désigné, de sorte que pour le déverrouillage de la soupape de surpression (21), il est placé sur le corps de soupape (22), une poignée (25) dépassant de la chambre (9) de sorte qu'elle présente sur la face frontale supérieure une ou plusieurs cames de butée (26) agissant avec la poignée (25) de sorte que dans une position de rotation de la poignée (25) l'épaulement (23) en prise dans l'évidement (16) de la paroi du réservoir (2) ne soit pas maintenu en prise.

5. Réservoir sous pression, selon un ou plusieurs des droits 1 à 4, ainsi désigné, de sorte que chaque saillie (15) en prise dans une contre-dépouille (13) formée sur la paroi du réservoir (2) il est prévu un évidement (16) placé de préférence au centre, pour le verrouillage de l'épaulement (23) situé sur le corps de soupape (12).

6. Réservoir sous pression, selon un ou plusieurs des droits 1 à 5, ainsi désigné, de sorte que le couvercle du réservoir (11) est muni d'un collet (17), disposé de préférence au centre, pour le maintien et la fixation d'un tuyau d'aspiration (5) pouvant être introduit dans le réservoir sous pression et du tuyau flexible (7) du rouleau à peindre (6).

# FIG. 1

FIG. 2

FIG. 3

FIG. 4